# EUROPEAN PATENT APPLICATION

(11) **EP 3 241 614 A1**
(43) Date of publication of application: **08.11.2017**
(21) Application number: 17163484.3
(22) Date of filing: 29.03.2017
(51) Int. Cl.: B01J 37/02, B01J 23/46, B01J 23/63, B01D 53/94, B01J 35/02

(54) **EXHAUST GAS PURIFICATION CATALYST FOR INTERNAL COMBUSTION ENGINE**

(30) Priority: 02.05.2016 JP 2016092554
(71) Applicant: Mitsubishi Jidosha Kogyo K.K., Tokyo 108-8410 (JP)
(72) Inventor: SATO, Ryosuke, Minato-ku, Tokyo 108-8410 (JP); IWACHIDO, Kinichi, Minato-ku, Tokyo 108-8410 (JP)
(74) Representative: Vossius & Partner Patentanwälte Rechtsanwälte mbB

(57) **Abstract**

An object is to provide an exhaust gas purification catalyst for an internal combustion engine that can achieve a higher exhaust gas purification performance and a higher engine output performance. A catalyst layer (23) is disposed in an exhaust gas passage, formed on a surface of the substrate (21), and includes: a first catalyst layer (27) exposed to an exhaust gas flow; and a second catalyst layer (25) formed between the first catalyst layer and the substrate. A catalyst component supported on the first catalyst layer includes rhodium. A catalyst component supported on the second catalyst layer includes at least one of palladium and platinum. The first catalyst layer is formed such that a density of the rhodium supported thereon decreases in a step-like manner through a plurality of segment zones segmented along an exhaust gas flow direction, and the second catalyst layer is formed such that a density of the palladium or the platinum supported thereon decreases in a step-like manner through a plurality of segment zones segmented along the exhaust gas flow direction.

## Description

### TECHNICAL FIELD

The present invention relates to an exhaust gas purification catalyst for an internal combustion engine.

### BACKGROUND

A purification catalyst used for exhaust gas discharged from a gasoline engine includes a three way catalyst that achieves oxidation and reduction of carbon oxide (CO), hydrocarbon (HC), and nitrogen oxide (NOx) at the same time. The three way catalyst mainly includes platinum (Pt), palladium (Pd), and rhodium (Rh) as catalyst metals, and various types of such a catalyst have been proposed including: a catalyst in which the three types of catalyst metals are mixed in a single catalyst layer; a catalyst in which the catalyst layers as upper and lower layers are provided and the catalyst metals are separately supported by the layers; and a catalyst divided into an upstream side section and a downstream side section, in an exhaust gas flow direction, and the catalyst metals are separately supported by the sections.

For example, Japanese Patent Application Lain-open No. 2015-24381 discloses an exhaust gas purification catalyst that is capable of efficiently purifying exhaust gas including saturated hydrocarbon and includes: a catalyst layer including Pt only as the catalyst metal on the upstream side in the exhaust gas flow direction; and a catalyst layer including Pd and Rh but including no Pt on the downstream side in the exhaust gas flow direction. In the catalyst layer including Pt only, a center portion includes a larger amount of Pt than a circumference edge portion.

Japanese Patent No. 5287884 discloses an exhaust gas purification catalyst that can suppress grain growth of a catalyst metal and includes: a substrate; a lower catalyst layer that is formed on the substrate and includes at least one of Pd and Pt; and an upper catalyst layer that includes Rh. An area including no upper catalyst layer is provided on the upstream side in the exhaust gas flow direction. The lower catalyst layer includes an upstream stage lower catalyst layer on the upstream side in the exhaust gas flow direction and a downstream stage lower catalyst layer on the exhaust gas flow direction. The upstream stage lower catalyst layer includes an oxygen absorbing and releasing material.

### SUMMARY

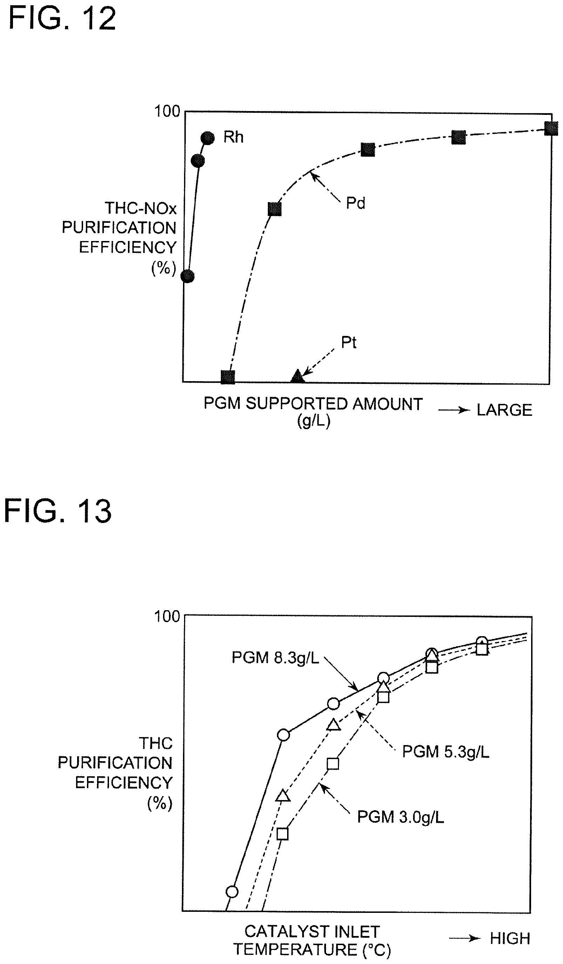

Due to raising concern toward air pollution, a catalyst system in a gasoline engine has been required to have an improved exhaust gas purification performance. In particular, considering the environment, reduction of the exhaust gas components emitted under a cold condition is an imminent issue. In view of this, a system with the three way catalyst installed close to the engine to have a temperature swiftly risen has been developed. Such a system with catalyst installed close to the engine, however, may cause degradation of an engine performance due to a rise in exhaust gas pressure. This even fuels a demand for the improvement of the catalyst performance to suppress a pressure loss of the catalyst and to conform to a stricter exhaust gas regulation. Generally, a higher exhaust gas purification performance can be achieved with a higher density of supported precious metals and with a higher catalyst temperature, as illustrated in FIG. 13. Logically, a catalyst with a larger amount of precious metals, as catalyst active components, can achieve a higher exhaust gas purification efficiency, but requires an extremely high cost.

The exhaust gas purification catalyst disclosed in each of Japanese Patent Application Lain-open No. 2015-24381 and Japanese Patent No. 5287884 described above has the substrate coated with a plurality of individual catalyst layers. In this configuration, a catalyst technique that can achieve three objects of further improving the exhaust gas purification performance, suppressing the exhaust gas pressure (reduction of pressure loss of the catalyst), and reducing the catalyst cost is yet to be pursued.

In view of the above described technical task, an object of at least one embodiment of the present invention is to provide an exhaust gas purification catalyst for an internal combustion engine that can improve an exhaust gas purification performance and an engine output performance.

An exhaust gas purification catalyst for an internal combustion engine according to at least one embodiment of the present invention is disposed in an exhaust gas passage of the internal combustion engine and includes: a substrate; a catalyst layer formed on a surface of the substrate; and a catalyst component supported on the catalyst layer. The catalyst layer includes: a first catalyst layer exposed to an exhaust gas flow; and a second catalyst layer formed on a substrate side surface of the first catalyst layer. A catalyst component supported on the first catalyst layer includes Rh. A catalyst component supported on the second catalyst layer includes at least one of Pd and Pt. The first catalyst layer is formed such that a density of the rhodium supported thereon decreases in a step-like manner through a plurality of segment zones segmented along an exhaust gas flow direction, and the second catalyst layer is formed such that a density of the palladium or the platinum supported thereon decreases in a step-like manner through a plurality of segment zones segmented along the exhaust gas flow direction, to be zero in some cases.

In the configuration described above, Rh with a higher catalyst purification performance than Pd is disposed on the upper layer that is exposed to the exhaust gas. Thus, the exhaust gas purification is effectively performed.

The first catalyst layer is formed such that a density of the rhodium supported thereon decreases in a step-like manner through a plurality of segment zones segmented along an exhaust gas flow direction. Thus, the supported density is higher on the catalyst upstream side, involving higher catalyst temperature, than a catalyst downstream side. Thus, the exhaust gas purification is effectively performed. In particular, the exhaust gas purification performance under a low temperature condition can be improved with a higher density of Rh supported in an upstream portion of the upper layer.

The second catalyst layer is formed such that a density of the palladium or the platinum supported thereon decreases in a step-like manner through a plurality of segment zones segmented along the exhaust gas flow direction. Thus, the supported density is higher on the catalyst upstream side than the catalyst downstream side.

With the configuration described above, the exhaust gas discharged under a high load condition can effectively be purified. With the above-described configuration with the supported density decreasing, a more efficient purification performance can be achieved compared with a configuration in which the same amount of the catalyst component is uniformly supported on the first catalyst layer and the second catalyst layer. In other words, the purification performance of the same level as the catalyst with the catalyst component uniformly supported may be achieved with a smaller amount of catalyst component because more catalyst components are supported in the upstream zones where the exhaust temperature is higher. Thus, an amount of wash coat and precious metal of a catalyst, including a base material (support member) made of precious metal, can be reduced, whereby pressure loss and cost of catalyst can be reduced. Reduction in pressure loss enables the catalyst to be installed at a position closer to the engine, whereby the exhaust gas can be further purified in a cold state while suppressing an increase in the discharge pressure of the exhaust gas from the engine.

### BRIEF DESCRIPTION OF DRAWINGS

FIG. 1 is a schematic configuration view of an exhaust gas purification system including an exhaust gas purification catalyst for an internal combustion engine, as one embodiment of the present invention;
FIG. 2 is a schematic configuration view of an exhaust gas purification device for the internal combustion engine according to one embodiment of the present invention;
FIG. 3A is an enlarged cross-sectional view taken along line A-A in FIG. 2, FIG. 3B is an enlarged cross-sectional view taken along line B-B in FIG. 2, FIG. 3C is an enlarged cross-sectional view taken along line C-C in FIG. 2;
FIG. 4 is a diagram illustrating a temperature distribution state in a catalyst measured after elapse of a certain time (several 10 seconds) since cold start;
FIG. 5 is a diagram illustrating how a length of the second catalyst layer affects the exhaust gas purification performance in a condition of internal combustion engine cold start;
FIG. 6 is a diagram illustrating an influence of a length of the second catalyst layer on the exhaust gas purification performance in an internal combustion engine high load condition;
FIG. 7 is a diagram illustrating a supported density and a supported length of a catalyst component in Example and Comparative Example;
FIG. 8 is a diagram illustrating a comparison in an exhaust gas purification performance among Comparative Examples 1 and 2 and Example 1 in the condition of internal combustion engine cold start;
FIG. 9 is a diagram illustrating a comparison among Comparative Examples 1 and 2 and Example 1 in the exhaust gas purification performance in the internal combustion engine high load condition;
FIG. 10 illustrates a comparison between Comparative Examples 1 and 2 and Examples 1, 2, and 3 in HC and NOx discharge amounts in the condition of internal combustion engine cold start;
FIG. 11 is a diagram illustrating a comparison in HC and NOx discharge amounts among Comparative Examples 1 and 2 and Examples 1, 2, and 3, in the internal combustion engine high load condition;
FIG. 12 is a characteristic graph illustrating a catalyst purification performance of each precious metal; and
FIG. 13 is a characteristic graph illustrating temperature characteristics of catalyst activity.

### DETAILED DESCRIPTION

The following describes some embodiments of the present invention with reference to the accompanying drawings. It should be noted that the sizes, materials, shapes, relative arrangement, and the like of the components described as embodiments or illustrated in the drawings are given by way of example and not intended to limit the scope of the present invention. As used herein, for example, expressions representing relative or absolute arrangement, including "in a direction", "along a direction", "in parallel with", "orthogonal to", "center", "concentric", and "coaxial", not only represent exactly what they mean but also include states relatively displaced with a tolerance or by an angle or distance that is small enough to provide the same level of functionality. As used herein, for example, expressions meaning that things are in identical states, including "the same", "identical", and "homogenous", not only represent exactly identical states but also include states with a tolerance or a difference that is small enough to provide the same level of functionality. As used herein, for example, expressions representing shapes, such as quadrangles and cylinders, not only represent geometrically exact quadrangles, cylinders, or the like but also represent shapes including irregularities and champers that can exhibit the same level of effects. Furthermore, the expressions of "including", "comprising", "provided with", and "having" one component as used herein do not exclude other components.

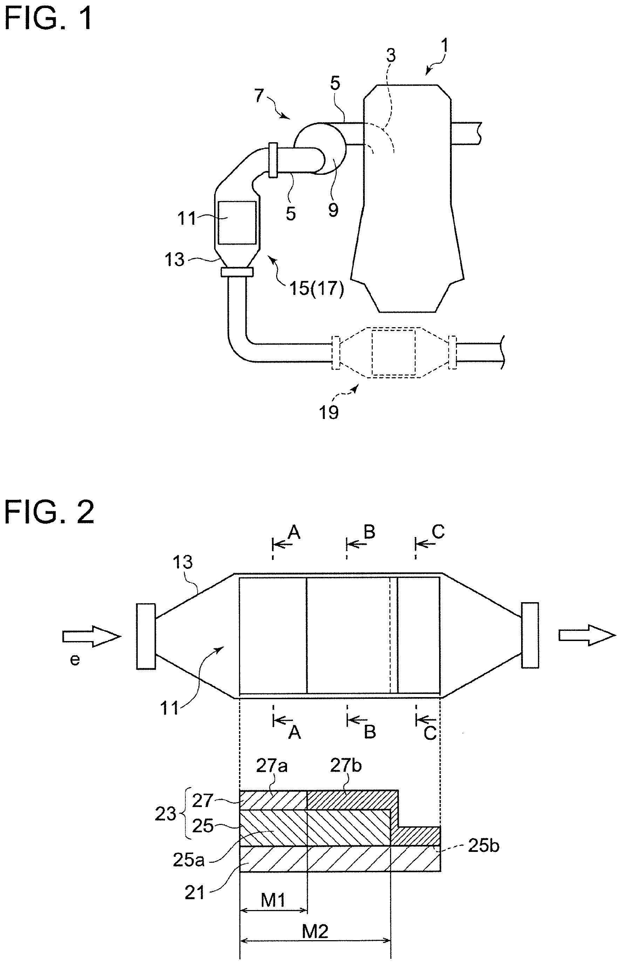

FIG. 1 is a schematic configuration view of an exhaust gas purification system including an exhaust gas purification catalyst for an internal combustion engine according to one embodiment of the present invention. As illustrated in FIG. 1, an exhaust gas port 3, in communication with a combustion chamber (not illustrated) of an internal combustion engine (an example of which includes a gasoline engine) 1, is formed for each cylinder. An exhaust pipe (exhaust passage) 5 is connected to the engine 1 in such a manner as to be in communication with a corresponding one of the exhaust gas ports 3. An exhaust gas turbocharger 7 is provided on a downstream side of the exhaust pipe 5 in an exhaust gas flow direction. The exhaust gas turbocharger 7, with a turbine housing 9 in communication with the exhaust pipe 5, compresses intake air sucked in with an energy of exhaust gas e discharged from the engine 1, and supplies the resultant air to the combustion chamber of the engine 1. The exhaust pipe 5 is provided with a catalyst device 15 with an exhaust gas purification catalyst 11 incorporated in a cylindrical casing 13.

In this example, the catalyst device 15 is provided as an upstream stage three way catalyst 17 provided immediately on the downstream side of the exhaust gas turbocharger 7. The exhaust gas purification system illustrates uses the upstream stage three way catalyst 17 only. A downstream stage three way catalyst 19 may be further provided on the downstream side, that is, below a vehicle floor for example. Thus, an exhaust gas purification system with a catalyst including both the upstream stage three way catalyst 17 and the downstream stage three way catalyst 19 may be employed.

As illustrated in FIG. 2, the exhaust gas purification catalyst 11 includes: a supporting substrate 21; a catalyst layer 23 formed on a surface of the supporting substrate 21; and a catalyst component (not illustrated) supported on the catalyst layer 23.

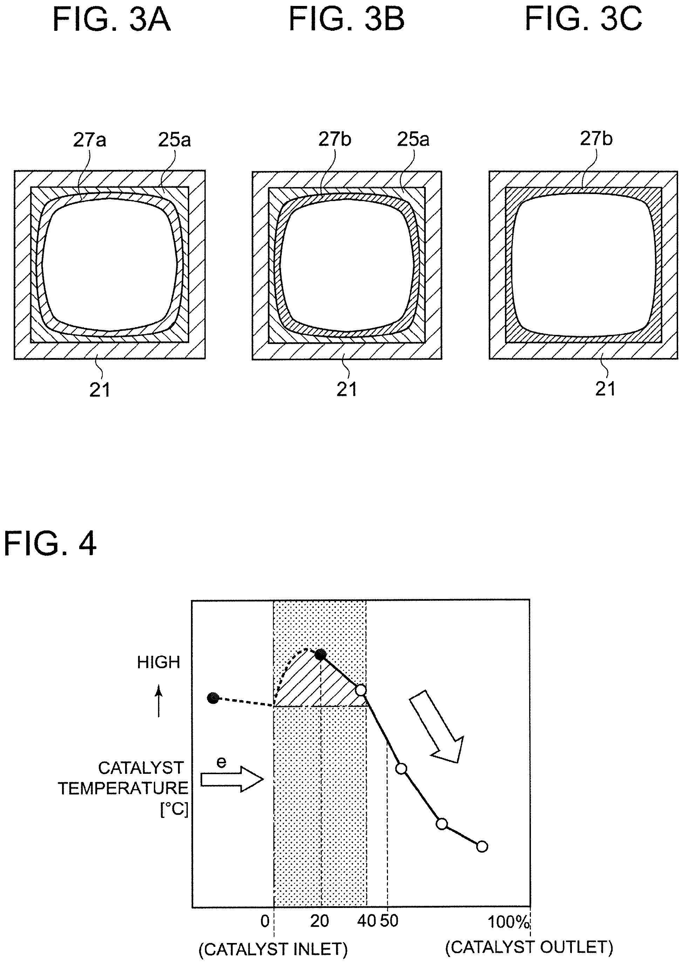

In an embodiment illustrated in FIG. 2, the supporting substrate 21 has a honeycomb structure (with cells generally having a rectangular cross-sectional shape) an example of which includes a honeycomb structure formed of cordierite or metallic foil. The supporting substrate 21 includes a single supporting substrate. The catalyst layer 23 includes: a first catalyst layer 27 which contacts an exhaust gas flow; and a second catalyst layer 25 which is formed between the first catalyst layer 27 and the supporting substrate 21 at a portion close to the surface of the supporting substrate 21. As illustrated in FIG. 3A, in each of the cells of the honeycomb structure forming the supporting substrate 21, a second catalyst layer 25a is formed on the supporting substrate 21 and a first catalyst layer 27a is further formed on the second catalyst layer 25a. The exhaust gas flows on the inner side of the first catalyst layer 27a with a hollow structure, and thus contacts the first catalyst layer 27a. The catalyst component supported on the second catalyst layer 25 includes palladium (Pd). The catalyst component supported on the first catalyst layer 27 includes rhodium (Rh). The catalyst component supported on the second catalyst layer 25 may include an oxygen storage capacity material (OSC material), and may have palladium (Pd) partially or entirely replaced with Pt. The catalyst component supported on the first catalyst layer 27 may include the OSC material.

In the first catalyst layer 27 and the second catalyst layer 25, the catalyst component is supported on an oxide base material including at least one of alumina(Al₂0₃), zirconia (ZrO₂), titanium (TiO₂), and ceria (CeO₂) as a main component. A function of what is known as a three way catalyst is achieved with the catalyst component including Pd and the OSC material supported on the second catalyst layer 25 and the catalyst component including Rh supported on the first catalyst layer 27. Thus, HC and CO in the exhaust gas are oxidized and NOx is reduced to N₂, CO₂, and H₂O harmless to the environment.

The second catalyst layer 25 is formed such that a density (or a supported density, i.e. an amount of the catalyst component supported per unit volume of the substrate) of the Pd and OSC supported thereon decreases in a step-like manner through a plurality of segment zones segmented along the exhaust gas flow direction. It can be understood that the supporting substrate 21 is segmented into a plurality of zones, in such a manner that a density of Pd and the OSC material supported on the second catalyst layer 25 decreases on a zone-by-zone basis from an upstream end to a downstream end of the supporting substrate 21. For example, as illustrated in FIG. 2, the plurality of zones include two segmented zones which is a second catalyst upstream layer 25a and a second catalyst downstream layer 25b. The density of Pd and the OSC material supported on the second catalyst downstream layer 25b are zero due to the decreasing.

The first catalyst layer 27 is also formed such that a density of the Rh supported thereon decreases in a step-like manner through a plurality of segment zones segmented along the exhaust gas flow direction. It can be understood that the supporting substrate 21 is segmented into a plurality of zones, in such a manner that a density of Rh supported on the first catalyst layer 27 decreases on a zone-by-zone basis from the upstream end to the downstream end of the supporting substrate 21. For example, as illustrated in FIG. 2, the first catalyst layer 27 includes two sectionalized zones which are a first catalyst upstream layer 27a and a first catalyst downstream layer 27b, with the density of the supported Rh set to be higher on the first catalyst upstream layer 27a than on the first catalyst downstream layer 27b.

FIGS. 3A, 3B, and 3C illustrate cross-sectional views of a stacked state of the supporting substrate 21, the first catalyst layer 27, and the second catalyst layer 25. FIGS. 3A, 3B, and 3C each illustrate a cross section of a single cell in a honeycomb structure, and are partially enlarged cross-sectional view of the supporting substrate 21 respectively taken along lines A-A, B-B, and C-C. FIG. 3A illustrates the stacked state on an upstream end side of the supporting substrate 21. FIG. 3B illustrates the stacked state in a center portion of the supporting substrate 21. FIG. 3C illustrates the stacked state on a downstream end side of the supporting substrate 21.

For example, the first catalyst layer 27 includes Rh of 0.1 to 3.0 g per liter of the supporting substrate 21, as a catalyst component. The second catalyst layer 25 includes Pd or Pt of 1 to 15 g per liter of the supporting substrate 21, as a catalyst component. For example, the OSC material includes complex oxide with CeO₂ or CeO₂-ZrO₂ as a main component. The second catalyst layer 25 further includes the OSC material of 1 to 100 g per liter of the supporting substrate 21.

The setting amounts of the supporting density of the second catalyst upstream layer 25a, the first catalyst upstream layer 27a, and the first catalyst downstream layer 27b are as follows. Specifically, the second catalyst upstream layer 25a includes Pd: 3 to 10 g/L and the OSC material: 5 to 50 g/L. The first catalyst upstream layer 27a includes Rh: 0.5 to 2.0 g/L. The first catalyst downstream layer 27b includes Rh: 0.1 to 1.0 g/L.

In such an embodiment, the catalyst layer 23 includes: the second catalyst layer 25 closer to the surface of the supporting substrate 21; and the first catalyst layer 27 formed on the second catalyst layer 25. The catalyst component supported on the second catalyst layer 25 includes Pd and the OSC material. The catalyst component supported on the first catalyst layer 27 includes Rh. Thus, Rh featuring a higher catalyst purification performance per supported density than Pd as the catalyst component is disposed on an upper layer side to contact the exhaust gas, whereby the exhaust gas purification is effectively performed. It is indicated in FIG. 12, illustrating a catalyst purification performance of each precious metal, that Rh has a higher purification performance per supported amount than Pd.

The substrate is segmented into a plurality of zones in such a manner that the density of Pd and the OSC material supported on the second catalyst layer 25 decreases in a zone length by zone length basis to be zero in some cases from the upstream end to the downstream end of the substrate. In this configuration, the exhaust gas purification is effectively performed with a larger amount of the precious metal disposed in a portion more on the catalyst upstream side. Similarly, the substrate is segmented into a plurality of zones in such a manner that the density of Rh supported on the first catalyst layer 27 decreases in a zone length by zone length basis from the upstream end to the downstream end of the substrate. In this configuration, the exhaust gas purification is effectively performed with a larger amount of the precious metal disposed in a portion more on the catalyst upstream side. Here, Rh of a high density is supported on an upstream portion of an upper layer as illustrated in FIG. 12, whereby a higher exhaust gas purification performance can be achieved under a low temperature condition. With Rh of a low density supported on a downstream portion of the upper layer, the exhaust gas purification performance can be guaranteed under a condition of high load and high exhaust gas flow rate. Specifically, Rh overwhelms other precious metals with its NOx reduction performance, and thus NOx purification performance can be expected under the condition of high load and high exhaust gas flow rate, even when the supported density of Rh on the downstream portion of the first catalyst layer is lower than that on the upstream side. All things considered, the exhaust gas purification performance can be guaranteed even under a condition of the high exhaust gas due to excellent contact between Rh on the upper layer and the exhaust gas.

With the present embodiment described above, HC, CO, and NOx discharged under the high load condition can be effectively purified after the engine start. A higher exhaust gas purification performance can be achieved compared with a configuration where the catalyst component is supported with the total supported amount being equal between the second catalyst layer 25 and the first catalyst layer 27, whereby the total supported amount of Pd and Rh can be reduced and thus a catalyst cost can be reduced. With the improvement of the exhaust gas purification performance, the catalyst capacity can be reduced or the thickness of the catalyst layer can be reduced with the wash coating amount reduced, whereby the exhaust pressure rise can be suppressed. With the exhaust pressure rise suppressed, the degradation of the engine performance can be suppressed, whereby the catalyst can be installed at a position close to the engine.

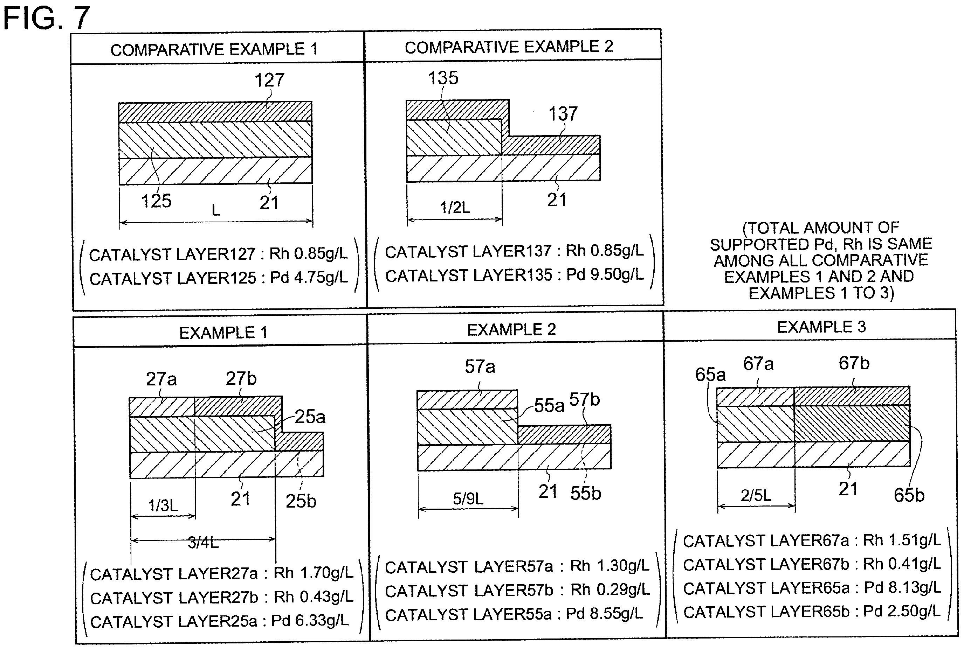

In some embodiments, as illustrated in FIG. 2 corresponding to Example 1 in FIG. 7, the second catalyst layer 25 includes the second catalyst upstream layer 25a on the upstream end side having a length equal to or longer than that of the first catalyst upstream layer 27a on the upstream side of the first catalyst layer 27. Thus, a configuration satisfying M2 ≥ M1 is achieved as illustrated in FIG. 2.

In such an embodiment, the length M1 of the first catalyst upstream layer 27a as an upstream end segmented zone in the first catalyst layer 27 that contacts the exhaust gas flow may be set to achieve a catalyst temperature higher than the temperature of the exhaust gas flowing into the catalyst based on a catalyst temperature distribution immediately after the engine start (see FIG. 4). Thus, in the first catalyst upstream layer 27a, the exhaust gas purification can be achieved immediately after the engine start.

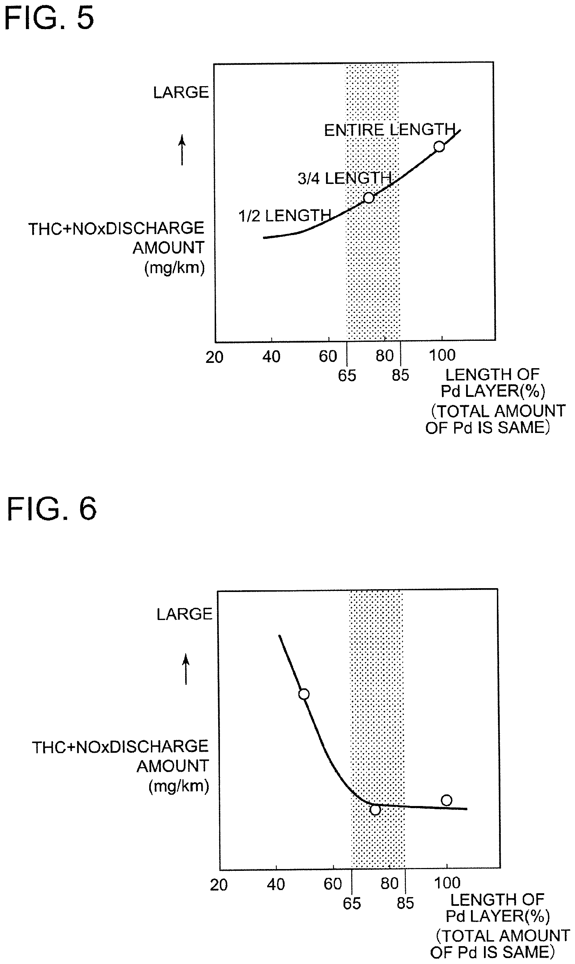

Effective exhaust gas purification can be performed with the added amount (added amount) of Pd and the OSC material supported on the second catalyst layer 25 set not only based on the catalyst temperature distribution but also based on the length of the second catalyst layer 25, that is, the support density of Pd (a supported weight of Pd per substrate volume defined by the length x cross-sectional area of the substrate) and on the oxygen storage capacity of the OSC material (for example, an oxygen storage capacity within a predetermined time period after oxygen atmosphere is switched to reduction atmosphere). When the Pd supported weight in the catalyst is fixed, the Pd supported density can be set to be higher by reducing the substrate volume (setting the substrate length shorter when the cross-sectional area of the substrate is fixed), whereby a more active catalyst can be achieved. Still, when the substrate is too short, the gas diffusion performance to the second catalyst layer 25 under the high load/high exhaust gas flowrate condition is compromised, and thus the oxygen storage capacity of the second catalyst layer 25 is largely compromised. Generally, the oxygen storage capacity of a three way catalyst is important for suppressing the degradation of the exhaust gas purification performance (NOx purification performance in particular) when an atmosphere is changed. When the oxygen storage capacity is too low, the robustness of the exhaust gas purification performance is compromised. It is well known that the oxygen storage capacity of a catalyst depends not only on the types or the supported weight of the OSC material but also depend largely on the supported density and a supported amount of precious metal based on a coexistence effect of the precious metals. Thus, the length of the second catalyst layer 25 may be appropriately set based on the supported density of Pd and the oxygen storage capacity of the OSC material (see FIGS. 5 and 6).

Thus, the length M2 of the second catalyst upstream layer 25a of the second catalyst layer 25 is set to be equal to or longer than the length M1 of the first catalyst upstream layer 27a. Thus, Pd and the OSC material supported on the second catalyst layer 25 and Rh supported on the first catalyst layer 27 can have a length with which the exhaust gas can be effectively purified immediately after the engine cold starts and up until the high load condition is achieved. All things considered, effective exhaust gas purification performance can be achieved.

In some embodiments, as illustrated in FIG. 2 (Example 1 illustrated in FIG. 7) and Example 2 illustrated in FIG. 7, a second catalyst layer 25(25a), 55(55a) is prepared. There is no portion corresponding to second catalyst downstream layers 25b and 55b, and thus the supported amount of both of Pd and the OSC material is zero (that is, the supported density is zero). In such an embodiment, the supported amount of both of Pd and the OSC material is zero in the portion corresponding to the second catalyst downstream layer 25b, 55b. Thus, Pd and the OSC material are supported only on the second catalyst upstream layers 25a, 55a. Thus, Pd is held in such a manner as to be concentrated on the upstream side involving a high exhaust gas temperature. All things considered, the exhaust gas purification with especially high efficiency under a low temperature condition can be achieved.

In some embodiments, as illustrated in FIG. 2 (Example 1 in FIG. 7), there is no portion corresponding to the second catalyst downstream layer 25b and thus the supported amount of both Pd and the OSC material is zero. The second catalyst upstream layer 25a has a longer length than the first catalyst upstream layer 27a. and the second catalyst upstream layer 25a is formed to cover a range between 65% to 85% of the entire substrate length from the upstream end of the supporting substrate 21 toward the downstream side.

In such an embodiment, when the Pd layer is set to be short based on the property of the second catalyst layer 25 (Pd layer) as illustrated in FIGS. 5 and 6, that is, as illustrated in FIGS. 5 when the Pd density increased in the condition with the same weight of the Pd supported on the catalyst, whereby the discharge amounts of HC and NOx decrease under the low temperature condition. When the Pd layer is too short as illustrated in FIG. 6, the oxygen storage capacity is degraded and thus the exhaust gas discharge amount (the NOx discharge amount in particular) increases. Thus, the length of the Pd layer needs to be set within a range with which the exhaust gas purification performance under both conditions.

In view of this, the second catalyst upstream layer 25a is formed to cover the range between 65% to 85% of the entire substrate length from the upstream end of the supporting substrate 21. Thus, the length favorably achieving both the supported density of Pd and the oxygen storage capacity can be set, whereby the exhaust gas purification effect due to the exhaust gas temperature immediately after the engine start (see FIG. 4) and the exhaust gas purification effect due to the supporting length of the Pd layer (see FIGS. 5 and 6) can both be achieved. All things considered, the exhaust gas purification performance can be largely improved.

In the embodiment illustrated in FIG. 2 (Example 1 in FIG. 7), the second catalyst upstream layer 25a is formed to cover the range of 65% to 85% of the entire substrate length from the upstream end of the supporting substrate 21 toward the downstream side. Furthermore, the first catalyst upstream layer 27a is formed to have a length covering a range of 30% to 50% of the entire substrate length from the upstream end of the supporting substrate 21 toward the downstream side. Rh featuring high catalytic activity per supported density is disposed in such a manner as to be concentrated in a portion where the temperature of the exhaust gas flowing into the catalyst becomes high immediately after the engine cold start (see FIG. 4).

In some embodiments, as illustrated in Example 2 in FIG. 7, the second catalyst layer 55 (55a) is prepared. There is no portion corresponding to the second catalyst downstream layer 55b, and thus the supported amount of both Pd and the OSC material is zero. Furthermore, the second catalyst upstream layer 55a and the first catalyst upstream layer 57a have the same length. The second catalyst upstream layer 55a and the first catalyst upstream layer 57a are each formed to cover a range of 50% to 60% of the entire substrate length from the upstream end of the supporting substrate 21 toward the downstream side. In Example 2 in FIG. 7, the layer is formed reach to a position of 5/9 of the entire length (position of about 56%).

When the improvement of the exhaust gas purification performance under the low temperature condition is the main objective, the Rh supported weight and the Pd supported weight on the upstream portion of the catalyst are important. Thus, preferably, the Pd supported weight in the second catalyst downstream layer 55b is set to be zero, and the Pd supported weight on the second catalyst upstream layer 55a is set to be high. In such a case, the second catalyst upstream layer 55a and the first catalyst upstream layer 57a have a length exceeding 50% to be equal to or larger than 55% and equal to or smaller than 60%.

In such an embodiment, the second catalyst upstream layer 55a and the first catalyst upstream layer 57a are set to have the same length covering the range of 50% to 60% of the entire substrate length from the upstream end of the supporting substrate 21 toward the downstream side. Thus, Rh and Pd can be disposed to be concentrated with high density in the portion having a higher temperature than the exhaust gas flowing into the catalyst immediately after the engine cold start (see FIG. 4). All things considered, the effective exhaust gas purification can be achieved immediately after the engine cold start.

In some embodiments, as illustrated in Example 3 in FIG. 7, a second catalyst upstream layer 65a and a first catalyst upstream layer 67a have the same length. The second catalyst downstream layer 65b has a lower Pd supported density than the second catalyst upstream layer 65a. The first catalyst downstream layer 67b has a lower Rh supported density than the first catalyst upstream layer 67a. The first catalyst upstream layer 67a and the second catalyst upstream layer 65a are formed to cover the range of 30% to 50% of the entire substrate length from the upstream end of the supporting substrate 21 toward the downstream side.

In this Example 3 in FIG. 7, Rh and Pd can be disposed to be concentrated with high density in the portion having a higher temperature than the exhaust gas flowing into the catalyst immediately after the engine cold start (see FIG. 4). It is indicated in FIG. 4 that the length achieving a catalyst temperature higher than the temperature of the exhaust gas flowing into the exhaust gas purification catalyst 11 is a length covering approximately 40% of the supporting substrate 21. Thus, the length may be set to be within the range or close to the range.

In this embodiment, the second catalyst upstream layer 65a has the same length as the first catalyst upstream layer 67a. The second catalyst upstream layer 65a is disposed closer to the upstream end side compared with the configuration in Example 2 illustrated in FIG. 7 with no second catalyst downstream layer 55b. Thus, as illustrated in FIG. 4, an effective exhaust gas purification can be achieved immediately after the engine cold start.

Next, the exhaust gas purification catalyst 11 is further described with reference to Examples in FIG. 7. The amount of NOx, CO, and HC in discharged exhaust gas and a purification performance were evaluated under conditions of predetermined test operation pattern, a predetermined period of time after the cold start, and a high load operation, for samples with the same total amount of Pd (including the OSC material) supported on the second catalyst layer 25 and Rh supported on the first catalyst layer 27, that is, with the same total precious metal supported amount, but with different segmented zones.

In Comparative Example 1 illustrated in FIG. 7, Pd and the OSC material on a second catalyst layer 125 and Rh on a first catalyst layer 127 are each uniformly supported on the corresponding catalyst layer over the entire length of the supporting substrate 21. In Comparative Example 2, Pd as the catalyst component on a second catalyst layer 135 is supported in an area that is 1/2 the length of the supporting substrate 21. The Rh on a first catalyst layer 137 is supported over the entire length of the supporting substrate 21 as in Comparative Example 1.

Example 1 illustrated in FIG. 7 corresponds to the configuration of the embodiment illustrated in FIG. 2. The first catalyst upstream layer 27a covers the range of 1/3 the length of the supporting substrate 21 from the upstream end, and the first catalyst downstream layer 27b covers the remaining 2/3 on the downstream side. The second catalyst upstream layer 25a covers the range of 3/4 the length of the supporting substrate 21 from the upstream end, with no portion corresponding to the second catalyst downstream layer 25b on the downstream side thereof. The amount of catalyst component supported on the portion is zero.

In Example 2 illustrated in FIG. 7, the first catalyst upstream layer 57a has a length covering 5/9 the length of the supporting substrate 21 from the upstream end, with the first catalyst downstream layer 57b covering the remaining 4/9 on the downstream side. The second catalyst upstream layer 55a has a length covering the 5/9 the length of the supporting substrate 21 from the upstream end as in the case of the first catalyst upstream layer 57a, with no portion corresponding to the second catalyst downstream layer 55b on the downstream side. The amount of catalyst component supported on the portion is zero.

In Example 3 illustrated in FIG. 7, the first catalyst upstream layer 67a has a length covering 2/5 the length of the supporting substrate 21 from the upstream end, with the first catalyst downstream layer 67b covering the remaining 3/5 on the downstream side. The second catalyst upstream layer 65a has a length covering the 2/5 the length of the supporting substrate 21 from the upstream end as in the case of the first catalyst upstream layer 67a, with the second catalyst downstream layer 65b formed on the downstream side. The supported density of Pd and Rh on each of Comparative Examples 1, 2, Examples 1, 2, and 3 is written below a corresponding one of schematic views illustrated in FIG. 7, for each segmented zone (each zone).

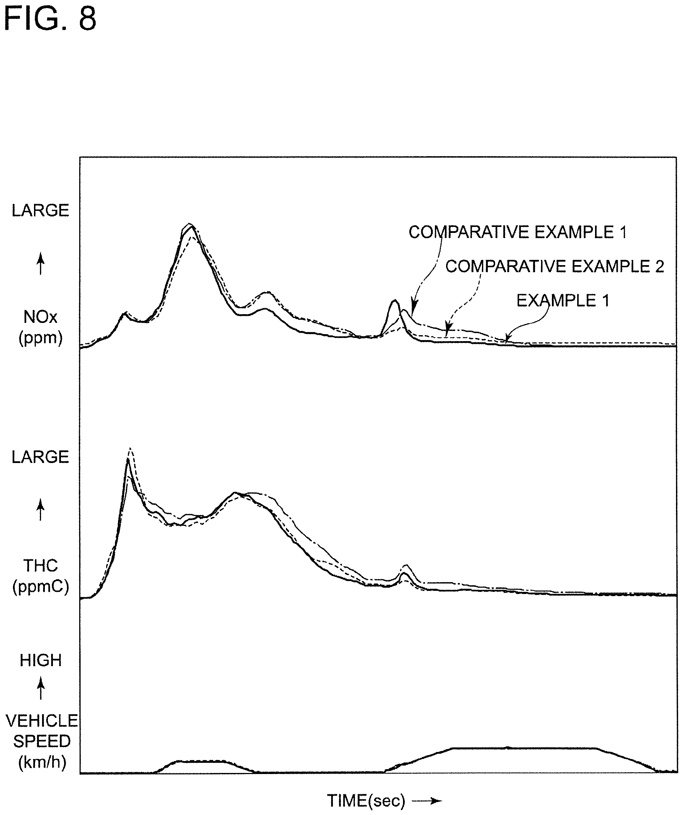

FIGS. 8 to 11 illustrate results of an exhaust gas purification performance test performed using the catalysts of Comparative Examples 1, 2, Examples 1, 2, and 3. FIG. 8 illustrates a comparison among Comparative Examples 1 and 2 and Example 1 in exhaust gas purification performance at a point that is predetermined time period (several tens of seconds) after the engine cold start. The horizontal axis represents an elapsed time after the engine cold start, NOx concentration is described in an upper section of the vertical axis, a THC concentration is described in a middle section of the vertical axis, and vehicle speed is described in a lower section of the vertical axis. The solid line represents Example 1, the dotted line represents Comparative Example 2, and the one dot chain line represents Comparative Example 1. It can be seen in the test results that Example 1 represented by the solid line achieved lower NOx concentration and HC concentration than Comparative Examples 1 and 2. Thus, it has been confirmed that NOx and HC largely decreased when the temperature of the catalyst rises, with the second catalyst layer 25 provided as the Pd zone and the first catalyst layer 27 provided as the Rh zone.

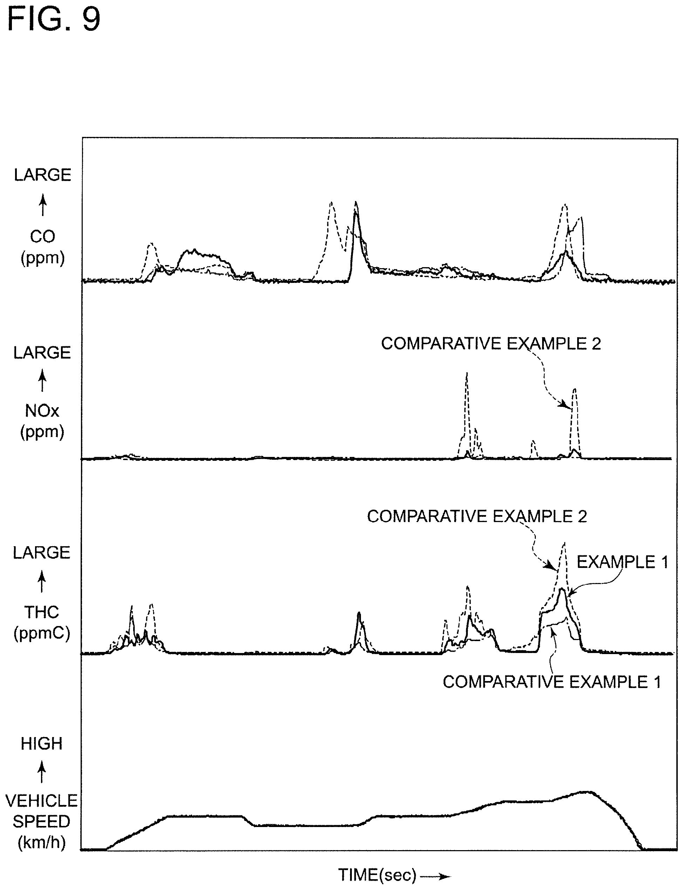

FIG. 9 illustrates a comparison among Comparative Examples 1 and 2 and Example 1 in exhaust gas purification performance under the engine high load condition. The horizontal axis represents the elapsed time, and CO concentration, NOx concentration, THC concentration, and vehicle speed are each described in a corresponding one of sections from upper section to a lower section on the vertical axis. The solid line represents Example 1, the dotted line represents Comparative Example 2, and the one dot chain line represents Comparative Example 1. It can be seen in the test results that Example 1 represented by the solid line achieved lower CO concentration, NOx concentration, and HC concentration than Comparative Examples 2. Thus, it has been confirmed that improvement has been achieved in terms of CO, NOx, and HC under the high load operation condition, with the second catalyst layer 25 provided as the Pd zone and the first catalyst layer 27 provided as the Rh zone.

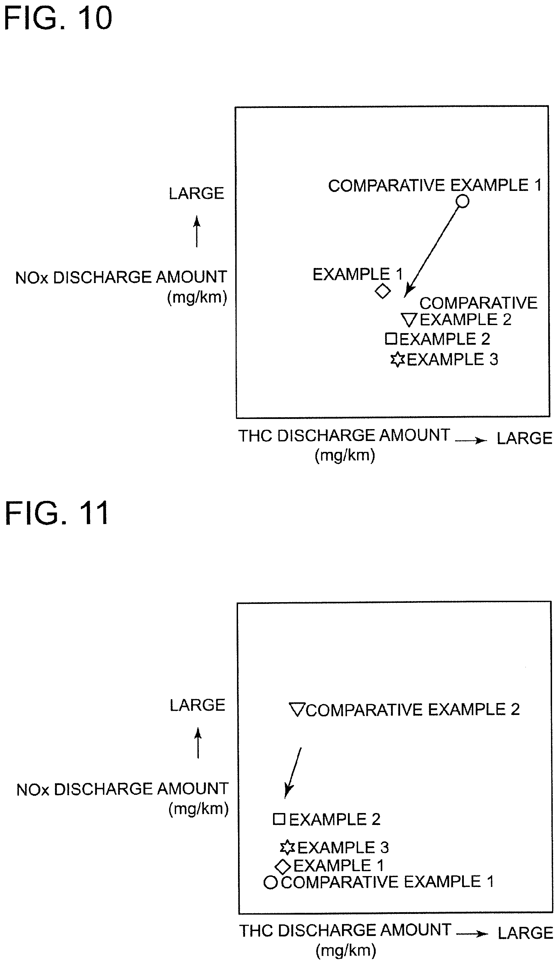

FIG. 10 illustrates a comparison in the HC and NOx discharge amount among Comparative Examples 1 and 2 and Examples 1, 2, and 3 under the engine cold start condition. FIG. 11 illustrates a comparison in the HC and NOx discharge amounts among Comparative Examples 1 and 2 and Examples 1, 2, and 3 under the engine high load condition. It can be seen in FIGS. 10 and 11 that effective exhaust gas purification was achieved in Examples 1, 2, and 3 after the cold start to the high load operation.

In the embodiment described above, the lengths of second catalyst upstream layer 25a, 55a, 65a supporting Pd and the OSC material is optimized, and the density of Rh supported on the first catalyst upstream layer 27a is increased. Thus, HC and NOx discharged under a high load condition can be effectively purified after the engine 1 starts.

## Claims

1. An exhaust gas purification catalyst for an internal combustion engine, the exhaust gas purification catalyst (11) being disposed in an exhaust gas passage (5) of the internal combustion engine (1) and comprising:
a substrate (21);
a catalyst layer (23) formed on a surface of the substrate; and
a catalyst component supported on the catalyst layer,
wherein the catalyst layer comprises:
a first catalyst layer (27, 57, 67) exposed to an exhaust gas flow; and
a second catalyst layer (25, 55, 65) formed between the first catalyst layer and the substrate,
wherein a catalyst component supported on the first catalyst layer includes rhodium,
wherein a catalyst component supported on the second catalyst layer includes at least one of palladium and platinum,
wherein the first catalyst layer is formed such that a density of the rhodium supported thereon decreases in a step-like manner through a plurality of segment zones segmented along an exhaust gas flow direction, and
wherein the second catalyst layer is formed such that a density of the palladium or the platinum supported thereon decreases in a step-like manner through a plurality of segment zones segmented along the exhaust gas flow direction.

2. The exhaust gas purification catalyst for an internal combustion engine according to claim 1, wherein a second catalyst upstream layer (25a, 55a, 65a), which is one of the segment zones of the second catalyst layer that is on an upstream end side with respect to the exhaust gas flow, has a length in the exhaust gas flow direction that is equal to or longer than a length of a first catalyst upstream layer (27a, 57a, 67a), which is one of the segment zones of the first catalyst layer that is on the upstream end side.

3. The exhaust gas purification catalyst for an internal combustion engine according to claim 2, wherein the density of the palladium or the platinum supported on a second catalyst downstream layer (25b, 55b, 65b), which is one of the segment zones of the second catalyst layer that is on a downstream side of the second catalyst upstream layer (25a, 55a, 65a), is 0.

4. The exhaust gas purification catalyst for an internal combustion engine according to claim 2 or 3,
wherein the second catalyst upstream layer (25a, 55a, 65a) has a length in the exhaust gas flow direction which is longer than a length of the first catalyst upstream layer (27a, 57a, 67a), and
wherein the second catalyst upstream layer is formed to cover a range of 65% to 85% of an entire length of the substrate from the upstream end toward a downstream side of the substrate.

5. The exhaust gas purification catalyst for an internal combustion engine according to claim 4, wherein the first catalyst upstream layer (27a, 57a, 67a) is formed to cover a range of 30% to 50% of the entire length of the substrate, from the upstream end toward the downstream side of the substrate.

6. The exhaust gas purification catalyst for an internal combustion engine according to claim 2 or 3,
wherein the length of the second catalyst upstream layer (25a, 55a, 65a) is same as the length of the first catalyst upstream layer (27a, 57a, 67a), and
wherein the first catalyst upstream layer is formed to cover a range of 50 to 60% of an entire length of the substrate from an upstream end toward a downstream side of the substrate.

7. The exhaust gas purification catalyst for an internal combustion engine according to claim 2 or 3,
wherein the length of the second catalyst upstream layer (25a, 55a, 65a) is same as the length of the first catalyst upstream layer (27a, 57a, 67a), and a length of a second catalyst downstream layer (25b, 55b, 65b) is same as a length of a first catalyst downstream layer (27b, 57b, 67b), and
wherein the first catalyst upstream layer and the second catalyst upstream layer are formed to cover a range of 30 to 50% of an entire length of the substrate from an upstream end to a downstream side of the substrate.
